# EUROPÄISCHE PATENTSCHRIFT

(11) **EP 3 347 266 B1**
(45) Veröffentlichungstag und Bekanntmachung des Hinweises auf die Patenterteilung: **02.12.2020**
(21) Anmeldenummer: 16784398.6
(22) Anmeldetag: 19.10.2016
(51) Int. Cl.: F16D 49/00, F16D 121/22, B64C 13/28, F16D 65/02, F16H 35/00

(54) **STELLANTRIEB FÜR EIN HOCHAUFTRIEBSSYSTEM EINES LUFTFAHRZEUGES**
ACTUATING DRIVE FOR A HIGH-LIFT SYSTEM OF AN AIRCRAFT
ACTIONNEUR POUR SYSTÈME D'HYPERSUSTENTATION D'UN AÉRONEF

(30) Priorität: 21.10.2015 DE 102015013611
(43) Veröffentlichungstag der Anmeldung: 18.07.2018
(73) Patentinhaber: Liebherr-Aerospace Lindenberg GmbH, 88161 Lindenberg/Allgäu (DE)
(72) Erfinder: BERGER, Lutz, 88161 Lindenberg (DE); BRAIG, Wolfgang, 88175 Scheidegg (DE); BUHMANN, Marc, 88167 Gestratz (DE)
(74) Vertreter: Herrmann, Uwe
(86) Internationale Anmeldenummer: PCT/EP2016/001731
(87) Internationale Veröffentlichungsnummer: WO 2017/067659

(56) Entgegenhaltungen:
- EP-A2- 2 371 709
- DE-A1- 19 833 397
- DE-A1-102012 220 563

## Beschreibung

Die Erfindung betrifft einen Stellantrieb für ein Hochauftriebssystem eines Luftfahrzeuges mit einer integrierten Kegelbremse als Rücklaufsperre.

Gattungsgemäße Rücklaufsperren finden in der Mechanik dann Verwendung, wenn eine Lastfahrt wegen eines Defektes unterbrochen wird und eine ungewollte Rückstellbewegung der Last aus Sicherheitsgründen zu unterbinden ist. Der Einsatz von derartigen Rücklaufsperren ist ein großes Thema in der Luftfahrtechnik, insbesondere kommen sogenannte "No-backs" innerhalb der mechanischen Stellantriebe eines Hochauftriebssystems von Flugzeugen zum Einsatz.

Hochauftriebssysteme umfassen an den Flugzeugtragflächen verstellbare Strukturen, um insbesondere während der Start- und Landephasen durch Flächenvergrößerung für erhöhten Auftrieb auch bei geringeren Luftgeschwindigkeiten zu sorgen. Dabei können eine oder mehrere in den Tragflächen angeordnete Klappen vorgesehen sein, die über eine zentrale Antriebseinheit und Transmissionen verstellbar sind. Für jede Klappe oder zumindest einen Teil der Klappen ist ein separater mechanischer Stellantrieb vorgesehen, der die von der zentralen Antriebseinheit bereitgestellte Antriebsenergie in die benötigte mechanische Arbeit zur Verstellung der Vorflügel bzw. Landeklappen wandelt. Oftmals wird durch diese Stellantriebe die Rotationsbewegung der zentralen Antriebseinheit in die benötigte Linearbewegung der Klappenmechanik transferiert.

Bei einem Defekt der Antriebswelle kann es aufgrund des Luftwiderstandes zu einer unkontrollierten Klappenbewegung und folglich zu einer Asymmetrie der Klappenstellung für die linke und rechte Tragfläche kommen. Bestehende Sicherheitsanforderungen verlangen jedoch, dass geeignete Sicherheitsvorkehrungen getroffen werden, die im Fehlerfall eine asymmetrische Klappenstellung vermeiden bzw. zumindest begrenzen. Geeignete Sicherheitsmechanismen sind als die vorbeschriebenen "No-backs" bekannt.

Bisher werden Reibscheibenbremsen als Rücklaufsperren eingesetzt, insbesondere auch mit integrierten Kraftverstärkern. Aus der US 8,511,441 B2 ist hingegen der Einsatz einer Konusbremse als Rücklaufsperre bekannt. Der vergleichsweise kompliziert aufgebaute Betätigungsmechanismus zum Auslössen der Rücklaufsperre umfasst zwei separate Bremskörper, deren axialer Abstand mittels eines Kugelmechanismus geregelt wird. Dabei ist es notwendig, dass ein Bremskörper sowohl mit der Eingangs- als auch mit der Ausgangswelle verbunden ist, während der zweite Bremskörper lediglich mit der Ausgangswelle des Stellantriebes in Verbindung steht. Diese Konstruktion ist jedoch kompliziert und benötigt eine Reihe von zusätzlichen Komponenten, was den gesamten Stellantrieb verteuert und zudem seine Fehleranfälligkeit erhöht.

Die Aufgabe der vorliegenden Erfindung beschäftigt sich mit der Konstruktion eines Stellantriebs mit Rücklaufsperre, der demgegenüber einfacher aufgebaut ist.

Gelöst wird diese Aufgabe durch einen Stellantrieb gemäß den Merkmalen des Anspruch 1. Vorteilhafte Ausgestaltungen des Stellantriebs sind Gegenstand der sich an den Hauptanspruch anschließenden Unteransprüche.

Erfindungsgemäß wird zur Aufgabenlösung ein Stellantrieb für ein Hochauftriebssystem eines Luftfahrzeuges mit einer Kegelbremse als integrierte Rücklaufsperre vorgeschlagen. Diese Rücklaufsperre setzt sich aus einem drehfest auf einer Welle, insbesondere der Ausgangswelle, des Stellantriebs montierten Bremskörper sowie aus wenigstens einer Bremsbacke zusammen, wobei der Bremskörper als auch die wenigstens eine Bremsbacke kegelförmige Reibflächen umfassen. Die Bremse profitiert damit von den Vorzügen einer Konusbremse.

Weiterhin erfindungsgemäß ist es, dass die wenigstens eine Bremsbacke über einen pneumatischen, hydraulischen oder elektrischen Verstellmechanismus direkt oder indirekt betätigbar ist und mittels des Verstellmechanismus mit dem Bremskörper in Eingriff bringbar ist. Anders als im zitierten Stand der Technik wird nicht der Bremskörper mittels eines komplexen Kugelmechanismus betätigt, sondern stattdessen die Bremsbacke. Zudem wird diese aktive mittels eines pneumatischen, hydraulischen oder elektrischen Verstellantriebes bewegt. Die Rücklaufsperre ist vergleichsweise einfach bauend, der Bremskörper muss nicht zwingend mit Ein- und Ausgangswelle gekoppelt sein, sondern es genügt die Lagerung auf der Ausgangswelle. Die erfindungsgemäße Konstruktion benötigt eine deutlich geringere Bauteilanzahl.

Erfindungsgemäß ist genau ein, vorzugsweise einteiliger, Bremskörper vorgesehen. Im Gegensatz zum Stand der Technik, der zwingend zwei separate Bremsscheiben benötigt, die zudem relativ zueinander bewegbar sein müssen, kommt die Erfindung mit einem einzigen einteiligen Bremskörper aus, was die insgesamt benötigte Bauteileanzahl der verwendeten Rücklaufsperre weiter reduziert. Dadurch lässt sich eine kostengünstigere Variante herstellen.

Gemäß einer bevorzugten Ausführungsform ist die wenigstens eine Bremsbacke mittels des Verstellmechanismus in axialer Richtung parallel zur Welle verstellbar. Die Bremsbacke lässt sich dadurch in axialer Richtung auf den Bremskörper aufschieben, sodass deren kegelförmige Reibflächen in Eingriff bringbar sind. Ein besonderer Vorteil der Erfindung besteht darin, dass die Kraft zur axialen Verlagerung nicht senkrecht zur Reibfläche steht. Aufgrund der kegelförmigen Ausbildung der Reibflächen kann die axial angreifende Verstellkraft in eine Normal- und in eine Radialkraft zerlegt werden, wobei die Normalkomponente der Verstellkraft auf die Reibflächen der Bremsbacke sowie des Bremskörpers wirkt und sich aufgrund des Kegelwinkels eine Kraftverstärkung erzielen lässt. Durch geeignete Reibflächenpaarung kann ein sehr hohes Bremsmoment erzielt werden.

Soll die Bremse nicht selbsthemmend wirken, so muss der Kegelwinkel gemäß dem Reibgesetz gewählt werden. Für bestimmte Anwendungen kann es jedoch durchaus wünschenswert sein, eine Selbsthemmung zu verwirklichen.

Weiterhin erfindungsgemäß ist es, dass ergänzend eine feststehende Bremsbacke vorgesehen ist. Hierzu ist es zweckmäßig, dass der Bremskörper in axialer Richtung verschieblich gelagert ist. Der Bremskörper kann entweder in axialer Richtung verschieblich auf der Welle gelagert sein oder zusammen mit der Welle in axialer Richtung verschieblich sein. Durch die axiale Verlagerung des Bremskörpers kann dieser über eine weitere Reibfläche mit der feststehenden Bremsbacke in Eingriff gebracht werden. Idealerweise ist der Bremskörper zwischen beiden Bremsbacken angeordnet. Durch Betätigung der verstellbaren Bremsbacke kann der Bremskörper in axialer Richtung auf die feststehende Bremsbacke geschoben und gleichzeitig mit dieser in Eingriff gebracht werden.

Die verschiebliche Bremsbacke ist erfindungsgemäß über einen hydraulischen und/oder elektrischen Verstellmechanismus betätigbar. Es besteht die Möglichkeit, die verschiebliche Bremsbacke mittels Federelement vorzuspannen. Die Federkraft drückt die verstellbare Bremsbacke auf den Bremskörper. Der Verstellmechanismus der Bremsbacke arbeitet hingegen gegen diese Federkraft, um die Bremsbacke vom Bremskörper zu lösen. Soll die Rücklaufsperre greifen, wird der Verstellmechanismus deaktiviert und die Federkraft bewegt die Bremsbacke auf den Bremskörper zu.

Beispielsweise ist der Einsatz eines Elektromagneten als Verstellmechanismus denkbar, dessen Magnetkraft derart wirkt, so dass die Bremsbacke von dem Bremskörper entgegen der Federkraft wegbewegt wird. Aus Sicherheitsgründen wird dadurch auch beim Ausfall des Elektromagnetes die Rücklaufsperre aktiviert. Der genau eine, vorzugsweise einteilige Bremskörper ist scheibenförmig ausgestaltet sein, wobei dessen Randfläche eine konvexe Oberflächenstruktur aufweist, um zwei kegelförmige Reibflächen für die feststehende und verstellbare Bremsbacke auszuformen.

Neben dem erfindungsgemäßen Stellantrieb betrifft die vorliegende Erfindung zudem ein Hochauftriebssystem mit wenigstens einem erfindungsgemäßen Stellantrieb. Folglich zeichnet sich das Hochauftriebssystem durch dieselben Vorteile und Eigenschaften aus, wie sie bereits voranstehend mit Bezug zum Stellantrieb beschrieben worden sind. Zur Vermeidung von Wiederholungen wird auf eine erneute Beschreibung verzichtet. Weiterhin betrifft die Erfindung ein Luftfahrzeug mit einem entsprechenden Hochauftriebssystem.

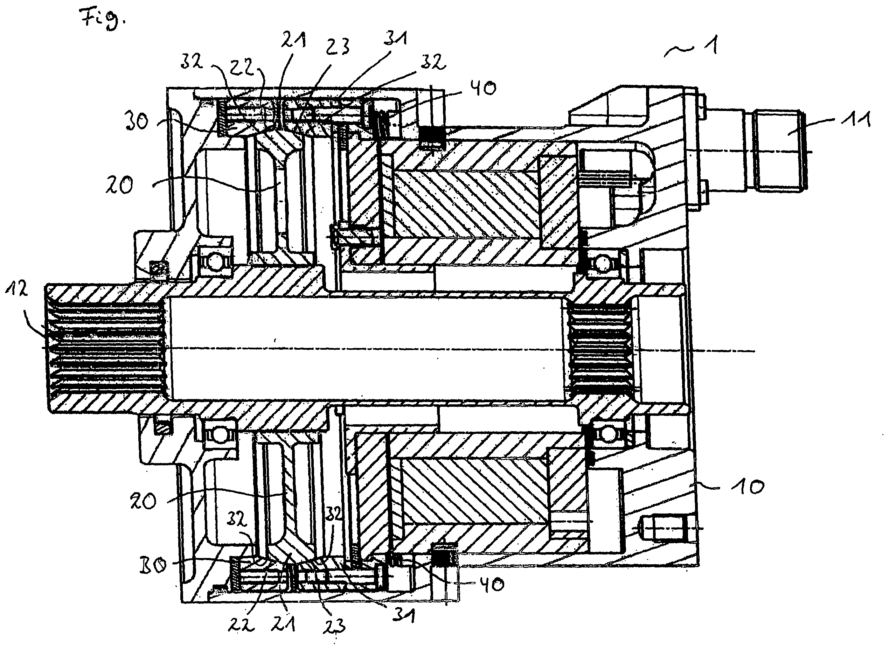

Weitere Vorteile und Eigenschaften der Erfindung sollen anhand einer in der Figur dargestellten vorteilhaften Ausführungsform näher erläutert werden.

Die einzige Figur zeigt einen Schnitt durch den erfindungsgemäßen Stellantrieb 1. Dieser umfasst ein Gehäuse 10 zur Aufnahme der erforderlichen Komponenten. Rechts oben tritt eine Eingangswelle 11, die von einer zentralen Antriebseinheit des Hochauftriebssystem angetrieben ist, bspw. von einem Power-Pack, in das Gehäuse 10 ein. Über eine Getriebeübersetzung wird die Rotationsenergie der Eingangswelle 11 auf die Ausgangswelle 12 des Stellantriebs 1 übertragen, welche zentral an der linken Gehäusekante aus dem Gehäuse 10 herausragt. Üblicherweise umfasst diese Ausgangswelle 12 am herausragenden Wellenende eine radiale Verzahnung, die eine nicht dargestellte Zahnstange zur unmittelbaren Betätigung der Klappenstruktur kämmt.

Innerhalb des Gehäuses auf der Ausgangswelle 12 sitzt ein scheibenförmiger Bremskörper 20, der drehfest mit der Ausgangswelle 12 verbunden ist. Der radiale Randumfang 21 des Bremskörpers 20 weist eine konvexe Oberflächenstruktur auf, um die beiden kegelförmigen Reibflächen 22, 23 auszuformen. Weiterhin ist der Bremskörper axial, d.h. parallel zur Wellenachse der Welle 12 verschieblich gelagert. Bevorzugt erfolgt die axiale Verschiebung des Bremskörpers relativ zur Welle 12, d.h. der Bremskörper ist zwar drehfest aber dennoch axial verschieblich auf der Welle 12 gelagert. Alternativ könnte auch die Welle 12 selbst in axialer Richtung bewegt werden, so dass der Bremskörper mit verschoben wird.

Über den Umfang bzw. zumindest Teilbereich des Umfangs des scheibenförmigen Bremskörpers 20 sind zumindest zwei Bremsbacken 30, 31 vorgesehen, die ebenfalls kegelförmige Reibflächen 32 aufweisen, welche im Wesentlichen parallel zu den zugeordneten Reibflächen 22, 23 des scheibenförmigen Bremskörpers 20 verlaufen. Denkbar ist es auch, über den Umfang des Rotationskörpers verteilt eine bestimmte Anzahl an Bremsbackenpaaren 30, 31 anzuordnen, so beispielsweise am oberen und unteren Gehäuserand. Im Folgenden wird der Einfachheit halber von einem Bremsbackenpaar 30, 31 gesprochen.

Die Bremsbacke 30 ist feststehend im Gehäuse 10 angeordnet, während die Bremsbacke 31 ebenfalls in axialer Richtung, d.h. parallel zur Wellenrichtung der Welle 12 verschieblich ist. Die Bremsbacke 31 ist zudem über das Federelement 40 vorgespannt, sodass die Federkraft des Federelementes 40 die Bremsbacke 31 in axialer Richtung in der Zeichnungsdarstellung nach links auf den scheibenförmigen Bremskörper 20 drückt.

Erfindungsgemäß ist im Bereich des Federelementes 40 zudem ein Elektromagnet vorgesehen, der die Bremsbacke 31 in axialer Richtung gegen das Federelement 40 zieht und dadurch den Kontakt zwischen Bremsbacke 31 und Bremskörper 20 unterbindet. Wird der Elektromagnet deaktiviert, so verschiebt sich die Bremsbacke 31 durch die Federkraft des Federelementes 40 nach links auf den Bremskörper, sodass die kegelförmigen Reibflächen 23, 32 des Bremskörpers 20 und der Bremsbacke 31 kontaktieren und eine Bremsreibung erzeugen. Weiterhin ist die Federkraft ausreichend stark, um den Bremskörper 20 über die Bremsbacke 31 in axialer Richtung nach links auf die feststehende Bremsbacke 30 zu verschieben.

Es besteht sowohl eine bremsende Kontaktierung zwischen der Reibfläche 32 der feststehenden Bremsbacke 31 und der zugehörigen Reibfläche 22 des Bremskörpers 20 als auch zwischen der Reibfläche 32 der verstellbaren Bremsbacke 31 und der zugeordneten Reibfläche 23 des Bremskörpers 20. Beide Bremsbacken 30, 31 sind folglich mit dem Bremskörper 20 in Eingriff und es wird die maximale Bremskraft zur Blockade der Ausgangswelle 12 erzeugt. Die Figurendarstellung zeigt den Stellantrieb 1 bei ausgelöster Rückstellsperre. Eine durch die Luftgeschwindigkeit erzeugte Rückstellkraft auf die Klappenelemente wird damit effektiv blockiert.

Anstatt eines Elektromagneten als Verstellmechanismus der Bremsbacke 31 könnte auch ein hydraulischer Verstellmechanismus zum Einsatz kommen. Ein Vorteil der Verwendung von Kegelbremsen zu nicht konusförmigen Bremsen als Rücklaufsperre liegt darin, dass die einwirkende Federkraft nicht senkrecht zur Reibfläche 22, 23, 32 steht. Aufgrund der kegelförmigen Ausbildung der Reibflächen 22, 23, 32 kann die axial angreifende Federkraft in eine Normal- und in eine Radialkraft zerlegt werden. Die Normalkomponente der Federkraft wirkt hierbei auf die Reibflächen 22, 23, 32 der Kegelbremse. Aufgrund des Kegelwinkels wird so eine Kraftverstärkung erzielt, wobei durch eine geeignete Reibflächenpaarung 22, 32 bzw. 21, 32 ein sehr hohes Bremsmoment erzielt werden kann. Es wird eine geringere Vorspannkraft benötigt, so dass das Federelementes 40 kleiner dimensioniert und ein geringeres Gesamtgewicht für den gesamten Aufbaus erzielt werden kann.

Soll die Bremse nicht selbsthemmend wirken, so muss der Kegelwinkel gemäß dem Reibgesetz gewählt werden. Für bestimmte Anwendungen ist es durchaus wünschenswert, dass eine Selbsthemmung auftritt. So beispielsweise beim Einsatz als Sicherheitsbremse.

Ein Vorteil der Erfindung liegt auch darin, dass die Anzahl der benötigten Bauteile gegenüber konventionellen Reibscheibenbremsen mit gleichem Bremsmoment oder gegenüber der bekannten Konstruktion mit Kugelmechanismus zur Bremskraftauslösung reduziert werden kann. Es ergeben sich geringere Herstellungskosten für den Stellantrieb, dessen Zuverlässigkeit aufgrund der Vereinfachung und Bauteilreduzierung zudem erhöht werden kann.

Weiterhin lässt sich eine geringere Baugröße des Stellantriebs 1 erzielen, weshalb sich dieser insbesondere für den Einsatz bei schlanken Flügelprofilen eignet. Die verwendete Bremse kann elektrisch oder hydraulisch gelüftet sein. Zudem ist ein direkter oder indirekter Betätigungsmechanismus, so z. B. auch für Trägerstufen in Servobremsen, denkbar.

Die Reibflächen 22, 23 des Bremskörpers 20 sowie der Bremsbacken 30, 31 können speziell beschichtet sein, um eine bessere Wärmeabfuhr und ein stabileres Bremsverhalten zu erreichen. Dadurch ergibt sich zudem eine höhere Lebensdauer. Durch den Einsatz des Federelementes 40 wird eine automatische Nachstellung der Bremse auch bei der üblichen Abnutzung der Bremsbelege erzielt. Durch die Verwendung des Elektromagneten kann auch bei einer Stromlosschaltung eine Rücklaufsperre gewährleistet werden.

## Patentansprüche

1. Stellantrieb (1) für ein Hochauftriebssystem eines Luftfahrzeuges, mit wenigstens einer integrierten Kegelbremse als Rücklaufsperre, umfassend zumindest einen auf wenigstens einer Welle (12) des Stellantriebs drehfest montierten Bremskörper (20) und wenigstens eine Bremsbacke, wobei die Reibflächen von Bremskörper und/oder Bremsbacke kegelförmig sind,
**dadurch gekennzeichnet,**
**dass** der Stellantrieb genau einen Bremskörper aufweist, dass wenigstens eine verschiebliche Bremsbacke (31) über zumindest einen pneumatischen, hydraulischen oder elektrischen Verstellmechanismus mit einer Reibfläche (23) des Bremskörpers in Eingriff bringbar ist, dass zusätzlich wenigstens eine feststehende Bremsbacke (30) vorgesehen ist und der Bremskörper in axialer Richtung verschiebblich gelagert ist, so dass eine weitere Reibfläche (22) des Bremskörpers mit der feststehenden Bremsbacke in Eingriff bringbar ist und dass der vorzugsweise einteilige Bremskörper scheibenförmig ist und eine konvexe Randfläche zur Ausbildung von den zwei den Bremsbacken zugeordneten kegelförmigen Reibflächen aufweist.

2. Stellantrieb nach Anspruch 1, **dadurch gekennzeichnet, dass** der Bremskörper einteilig ist.

3. Stellantrieb nach einem der vorhergehenden Ansprüche, **dadurch gekennzeichnet, dass** die wenigstens eine verschiebliche Bremsbacke (31) mittels des Verstellmechanismus in axialer Richtung parallel zur Welle verstellbar ist.

4. Stellantrieb nach einem der vorhergehenden Ansprüche, **dadurch gekennzeichnet, dass** durch Betätigung der verschieblichen Bremsbacke der Bremskörper in axialer Richtung auf die feststehende Bremsbacke schiebbar und mit dieser in Eingriff bringbar ist.

5. Stellantrieb nach einem der vorhergehenden Ansprüche, **dadurch gekennzeichnet, dass** die verschiebliche Bremsbacke mittels wenigstens eines Federelementes (40) vorgespannt ist und der Verstellmechanismus die Bremsbacke entgegen der Federkraft drückt.

6. Stellantrieb nach einem der vorhergehenden Ansprüche, **dadurch gekennzeichnet, dass** der Verstellmechanismus wenigstens ein Elektromagnet ist oder umfasst, dessen Magnetkraft die Bremsbacke von dem Bremskörper wegbewegt.

7. Hochauftriebssystem eines Luftfahrzeuges mit wenigstens einem Stellantrieb gemäß einem der vorhergehenden Ansprüche.

8. Luftfahrzeug mit wenigstens einem Hochauftriebssystem nach Anspruch 7.

## Claims

1. Actuating drive (1) for a high-lift system of an aircraft, comprising at least one integrated cone brake as a return stop, which comprises at least one brake block (20) mounted on at least one shaft (12) of the actuating drive for conjoint rotation and at least one brake shoe, the friction contact surface of the brake block and/or brake shoe being conical,
**characterised in that**
the actuating drive comprises exactly one brake block,
**in that** at least one movable brake shoe (31) can be brought into engagement with a friction contact surface (23) of the brake block by means of at least one pneumatic, hydraulic or electrical adjustment mechanism, **in that** at least one stationary brake shoe (30) is additionally provided and the brake block is movably mounted in the axial direction, such that another friction contact surface (22) of the brake block can be brought into engagement with the stationary brake shoe, and **in that** the preferably one-piece brake block is disc-shaped and has a convex lateral face for forming the two conical friction contact surfaces assigned to the brake shoes.

2. Actuating drive according to claim 1, **characterised in that** the brake block is in one piece.

3. Actuating drive according to any of the preceding claims, **characterised in that** the at least one movable brake shoe (31) can be adjusted in parallel with the shaft in the axial direction by means of the adjustment mechanism.

4. Actuating drive according to any of the preceding claims, **characterised in that**, by actuating the movable brake shoe, the brake block can be slid in the axial direction onto the stationary brake shoe and can be brought into engagement therewith.

5. Actuating drive according to any of the preceding claims, **characterised in that** the movable brake shoe is pre-tensioned by means of at least one spring element (40) and the adjustment mechanism pushes the brake shoe counter to the spring force.

6. Actuating drive according to any of the preceding claims, **characterised in that** the adjustment mechanism is or comprises at least one electromagnet, the magnetic force of which moves the brake shoe away from the brake block.

7. High-lift system of an aircraft comprising at least one actuating drive according to any of the preceding claims.

8. Aircraft comprising at least one high-lift system according to claim 7.

## Revendications

1. Actionneur (1) pour système d'hypersustentation d'un aéronef, comprenant au moins un frein à cône de friction intégré comme blocage d'inversion, comprenant au moins un corps de frein (20) monté solidaire en rotation sur au moins un arbre (12) de l'actionneur
et au moins une mâchoire de frein, les surfaces de friction du corps de frein et/ou de la mâchoire de frein étant coniques,
**caractérisé**
**en ce que** l'actionneur comporte exactement un corps de frein,
**en ce qu'**au moins une mâchoire de frein (31) déplaçable peut être amenée en prise avec une surface de friction (23) du corps de frein par le biais d'au moins un mécanisme de réglage pneumatique, hydraulique ou électrique, **en ce qu'**au moins une mâchoire de frein (30) stationnaire est prévue en plus et le corps de frein est monté déplaçable dans la direction axiale, de sorte qu'une autre surface de friction (22) du corps de frein peut être amenée en prise avec la mâchoire de frein stationnaire et **en ce que** l'exactement un corps de frein, de préférence constitué d'une seule pièce, est en forme de disque et comporte une surface de bord convexe pour former les deux surfaces de friction coniques associées aux mâchoires de frein.

2. Actionneur selon la revendication 1, **caractérisé en ce que** le corps de frein est constitué d'une seule pièce.

3. Actionneur selon l'une des revendications précédentes, **caractérisé en ce que** l'au moins une mâchoire de frein (31) déplaçable peut être déplacée dans la direction axiale parallèlement à l'arbre au moyen du mécanisme de réglage.

4. Actionneur selon l'une des revendications précédentes, **caractérisé en ce que**, par l'actionnement de la mâchoire de frein déplaçable, le corps de frein peut être déplacé dans la direction axiale vers la mâchoire de frein stationnaire et être amené en prise avec celle-ci.

5. Actionneur selon l'une des revendications précédentes, **caractérisé en ce que** la mâchoire de frein déplaçable est sollicitée au moyen d'au moins un élément formant ressort (40) et le mécanisme de réglage pousse la mâchoire de frein à l'encontre de la force de ressort.

6. Actionneur selon l'une des revendications précédentes, **caractérisé en ce que** le mécanisme de réglage est ou comprend au moins un électroaimant, dont la force magnétique éloigne la mâchoire de frein du corps de frein.

7. Système d'hypersustentation d'un aéronef comprenant au moins un actionneur selon l'une des revendications précédentes.

8. Aéronef comprenant au moins un système d'hypersustentation selon la revendication 7.
